# EUROPEAN PATENT SPECIFICATION

(11) **EP 3 653 463 B1**
(45) Date of publication and mention of the grant of the patent: **24.04.2024**
(21) Application number: 19475504.7
(22) Date of filing: 13.11.2019
(51) Int. Cl.: B61D 45/00, B60P 3/077, B60T 3/00

(54) **THE METHOD OF SECURING A STOP FOR RAILWAY WAGONS FOR THE TRANSPORT OF CARS**
DIE METHODE ZUR SICHERUNG EINES STOPPERS FÜR EISENBAHNWAGEN FÜR DEN TRANSPORT VON AUTOS
PROCÉDÉ DE SÉCURISATION D'UN ARRÊT POUR DES WAGONS DE CHEMIN DE FER POUR LE TRANSPORT DE VOITURES

(30) Priority: 16.11.2018 SK 501192018 U
(43) Date of publication of application: 20.05.2020
(73) Proprietor: Tatravagónka a.s., 05801 Poprad (SK)
(72) Inventor: SLEBODNÍK, Vladimír, 05322 Odorín (SK)
(74) Representative: Belicka, Ivan

(56) References cited:
- DE-A1- 4 142 559
- SK-U1- 500 632 018

## Description

### Field of the invention

The technical solution relates to a method of securing a stop for railway wagons for the transport of cars.

### Background of the invention

At present, different solutions are used to secure cars when they are transported on railway wagons. The easiest solution is to use a wedge that is fixed at the wagon's loading surface. However, this method is labor-intensive and costly because of the need for a large number of wedges.

For example, the document DE102007004519 discloses a wheel stop solution, in particular for a freight wagon for the transport of cars, having a retaining arm which lies on a flat support arm, and the two arms are pivoted on a common joint about three hundred and sixty degrees. In a further document DE 0497715, a solution is described for wedging the transported vehicles on the floors of trailers or railway wagons.

In the documents FR2419198, FR2376017, EP0284532, is the stop position secured by a spur. In the documents EP0497715, WO2010007245, is the securing of stop solved by a backstop firmly fixed to the stop arm and in the locking position supported from the side by the stop guide.

The document SK50063-2018U1 provides a vertically adjustable stop, where a simple movement in vertical direction changes the horizontal position of the moving part of the stop. This technical solution lacks the possibility of changing the position by other than horizontal. Other solutions use the center rail to secure the stop, which is located along the entire length of the wagon.

### The nature of the technical solution

The drawbacks of the prior art are eliminated by the utility model described in this application, the nature of the present invention being a method of securing a stop for wagons for the transport of cars comprising a fixed part having the shape of an inverted letter U where the grooves in the side walls are formed in the inverted V-shape with one arm shorter, then a movable part is placed on the fixed part where on the movable parts there are pins which engage in the grooves of the fixed part, while the fixed part comprises holes corresponding to the pins on the guide. This arrangement makes it possible to adjust the stop from the perpendicular direction to the axle of the wagon in parallel with the axle of the wagon and vice versa by means of pins on the guides and holes on the fixed part. This solution allows the wheel stop load to be distributed so that the reactions that arise from the torque are captured by the pins in the guide and the holes in the fixed part of the stop or vice versa. Also, by moving in a horizontal vertical direction, the horizontal position of the movable part will change.

### Overview of drawings

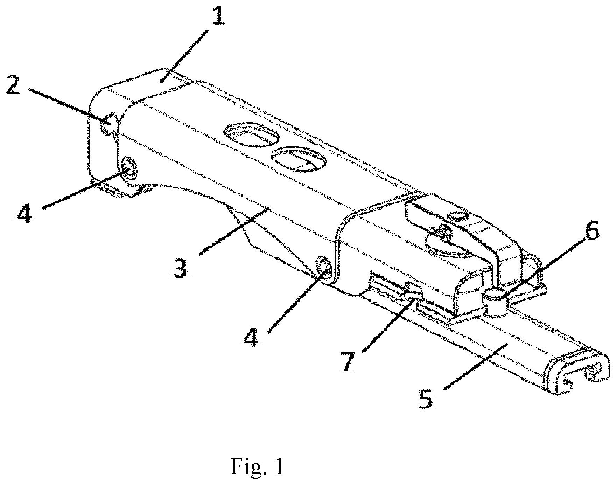

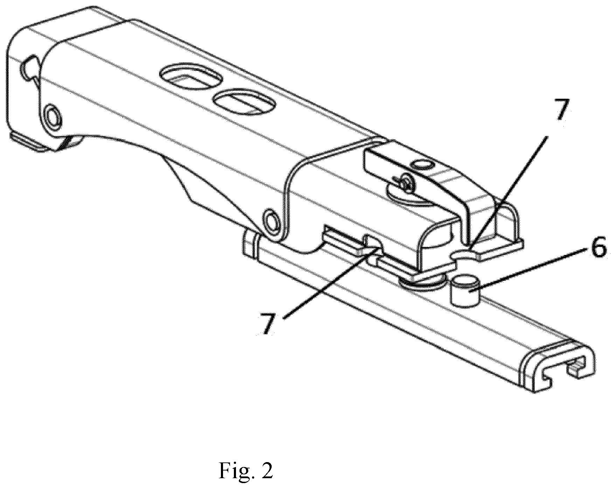

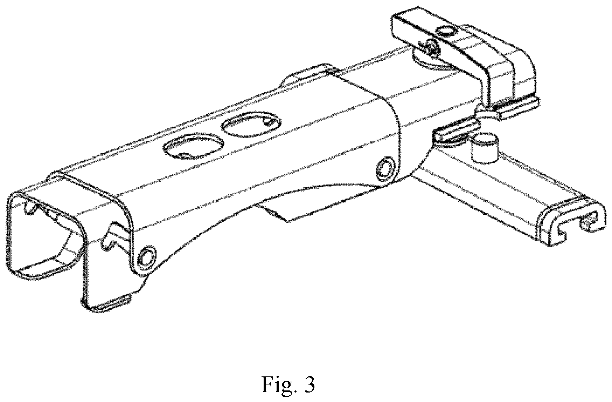

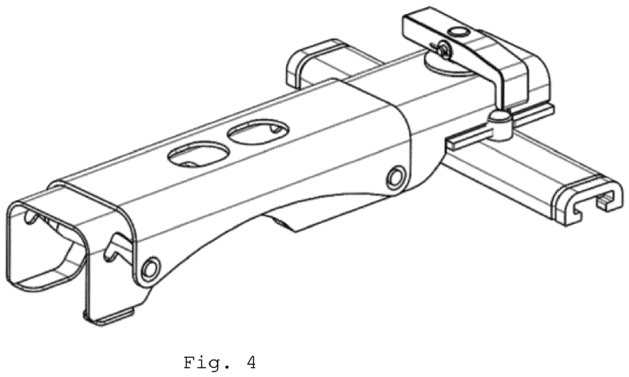

In FIG. 1 is shown a stop in a parallel direction with the axle of the wagon, FIG. 2 shows a stop after lifting, FIG. 3 shows a stop after turning perpendicular to the axle of the wagon, in FIG. 2 is shown a stop after its laying and locking.

### Examples of the implementation of the technical solution

The method of securing a stop for wagons for the transport of cars comprising a fixed part 1 having the shape of an inverted letter U where are on the side walls formed the grooves 2 in the form of an inverted letter V with one arm shorter, then is on the fixed part 1 positioned a movable part 3, where in the corresponding places are the pins 4 located on the movable part 3, which engage in the grooves 2 of the fixed part 1, while the fixed part 1 comprises slots/ holes 7 corresponding to the pins 6 on the guide 5 . This arrangement makes it possible to adjust the stop from the perpendicular direction to the axle of the wagon in parallel with the axle of the wagon and vice versa by means of pins 6 on the guides 5 and holes 7 on the fixed part 1. This solution makes it possible to distribute the load of the wheel stop so that the reactions that arise from the torque are captured by the pins 6 in the guide 5 and the holes 7 in the fixed part 1 of the stop.

## Claims

1. The method of securing a stop for railway wagons for the transport of cars, said stop comprising
- an U-shaped fixed part (1), where grooves (2) are located on the side walls with the shape of the inverted letter V with one shorter arm,
- a movable part (3) located on the fixed part (1), with first pins (4) arranged in the corresponding places on the movable part (3), these first pins (4) engaging in the grooves (2) of the fixed part (1),
- and a guide (5) comprising second pins (6), whereby holes on the fixed parts (1) correspond to the second pins (6) on the guide (5),
**characterized in that**
by means of the pins (6) on the guide (5) and the holes (7) on the fixed part (1) it is possible to adjust the fixed part from the parallel direction to the axle of the wagon to perpendicular direction with the axle of the wagon by lifting, rotating by 90 degrees and by placing the movable part (3) and vice versa.

## Patentansprüche

1. Das Verfahren zur Sicherung des Anschlags für Eisenbahnwagen für die Kraftfahrzeugbeförderung, wobei der angeführte Anschlag besteht aus
- einem festen Teil (1), der eine Form des umgekehrten Buchstabens U hat, wo an den Seitenwänden Nuten (2) in Form eines umgekehrten Buchstabens V mit einem kürzeren Arm gebildet sind,
- einem beweglichen Teil (3), der auf dem festen Teil (1) angeordnet ist, mit den ersten Bolzen (4) auf den entsprechenden Stellen des beweglichen Teils (3) angeordnet, wobei diese ersten Bolzen (4) in die Nuten (2) des festen Teils (1) einrasten;
- und aus der Führung (5), in der die zweiten Bolzen (6) beinhaltet sind, wobei die Öffnungen auf den festen Teilen (1) den zweiten Bolzen (6) auf der Führung (5) entsprechen,
**dadurch gekennzeichnet, dass**
es mit den Bolzen (6) auf der Führung (5) und mit den Öffnungen (7) auf dem festen Teil (1) möglich ist, den festen Teil aus der parallel laufenden Richtung zur Achse des Wagens durch Heben, Drehen um 90 Grad und Auflegen des beweglichen Teils (3) in die senkrechte Richtung zur Achse des Wagens einzustellen und umgekehrt.

## Revendications

1. La méthode de sécurisation d'nn arrêt des wagons des chemins de fer destinés pour transports des voitures, étant donné que l'arrêt est composé de
- une partie fixe (1) en forme de la lettre U inversée, où, sur les parois latérales, se trouvent des rainures (2) en forme de lettre V inversée avec un bras plus court,
- une partie mobile (3) placée sur la partie fixe (1) avec des premiers boulons (4) placés respectivemenet sur les parties correspondantes de la partie mobile (3), ces premiers boulons (4) s'insèrent dans les rainures (2) de la partie fixe (1),
- et un guide (5), contenant des boulons (6), étant donné que les ouvertures dans les parties fixes (1) correspondent aux autres boulons (6) sur le guide (5),
**caractérisé en ce que**
par les boulons (6) du guide (5) et les ouvertures (7) de la partie fixe (1), il est possible d' ajuster la partie fixe d'une direction parallèle à l'axe du wagon à une direction perpendiculaire à l'axe du wagon par soulèvement, par tourner de 90 degrés et par positionner la partie mobile (3) et vice versa.
